(19) Europäisches Patentamt
European Patent Office
Office européen des brevets

(11) EP 4 209 533 B1

(12) **EUROPEAN PATENT SPECIFICATION**

(45) Date of publication and mention of the grant of the patent:
**28.02.2024 Bulletin 2024/09**

(21) Application number: **22150842.7**

(22) Date of filing: **11.01.2022**

(51) International Patent Classification (IPC):
***C08G 65/336*** *(2006.01)* ***C08L 71/02*** *(2006.01)*
***C09J 171/02*** *(2006.01)*

(52) Cooperative Patent Classification (CPC):
(C-Sets available)
**C08G 65/336; C08L 71/02; C09J 171/02** (Cont.)

(54) **COMPOSITION COMPRISING POLYMER AND LIGNIN DERIVATIVE**

ZUSAMMENSETZUNG MIT POLYMER UND LIGNINDERIVAT

COMPOSITION COMPRENANT UN POLYMÈRE ET UN DÉRIVÉ DE LIGNINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.07.2023 Bulletin 2023/28**

(73) Proprietors:
- **Kaneka Belgium N.V.**
  **2260 Westerlo-Oevel (BE)**
- **Vito**
  **2400 Mol (BE)**

(72) Inventors:
- **HARUMASHI, Tatsuro**
  **2260 WESTERLO-OEVEL (BE)**
- **PEETERS, Luc**
  **2260 WESTERLO-OEVEL (BE)**
- **MARIËN, Hanne**
  **2260 WESTERLO-OEVEL (BE)**
- **RUBENS, Maarten**
  **2400 MOL (BE)**
- **MULUNDA, Mikael Monga**
  **2400 MOL (BE)**
- **VENDAMME, Richard**
  **2400 MOL (BE)**

(74) Representative: **Algemeen Octrooi- en Merkenbureau B.V.**
**P.O. Box 645**
**5600 AP Eindhoven (NL)**

(56) References cited:
**EP-A1- 2 684 690**
**EP-A1- 3 825 359**
**WO-A1-2005/111150**
**WO-A1-2021/119971**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 209 533 B1

(52) Cooperative Patent Classification (CPC): (Cont.)

C-Sets
**C08L 71/02, C08L 97/005**

## Description

The present invention relates to a composition comprising a polymer having at least one reactive silyl group and a lignin derivative. The invention further relates to use of such composition.

Polymers having a reactive silicon group (hydrolyzable silyl group) are widely used for applications such as sealing material, adhesive, paint and the like. Examples of such polymers include polymers having a polyoxyalkylene polymer, a (meth)acrylate-based polymer, a polyisobutylene polymer or a silicone as the main chain skeleton.

Silyl terminated polyethers are a special class of polymers which have as an end group of the long middle polyether section of the polymer, also referred to as a terminating group, a silyl type molecule. The reactive silyl group is crosslinked by the formation of a siloxane bond, which is accompanied by hydrolysis due to moisture even at room temperature, to give a rubbery cured product. Silyl terminated polyethers are main components in solvent-free sealant and adhesive products. These products are typically isocyanate free. Sealant products manufactured with silyl terminated polyethers have good characteristics, such as adhesion on a wide range of substrate materials, and have good temperature and UV (ultraviolet) resistance. This makes these products applicable in a wide range of applications, such as in building and construction, industry, transportation, flooring, waterproofing, DIY and many others.

The silyl terminated polyethers can be formed using relatively simple chemistry techniques. On application the products cure from a liquid or gel state to a solid. Curing entails cross-linking by the hydrolysis of silyl ethers. Crosslinking improves certain characteristics of the final material.

A specific type of such silyl terminated polyethers is known as Kaneka's MS Polymer™. As a middle section it contains a functionalized polyether backbone with methoxysilane terminal groups. It provides excellent performances and makes MS Polymer-based products unique and beneficial for various applications mainly as sealant or adhesive in varying areas such as construction, industry, consumer and specialties. Examples of main applications include construction sealant, flooring adhesive, waterproofing and roof applications, industrial transportation, windscreen adhesive. MS Polymers provide environmentally friendly alternatives to existing technologies in that no solvents are required, they are isocyanate-free, and also PVC-, silicone- and detergent-free and provide very low emissions. MS Polymers provide easy and robust processing and such versatile properties as self-levelling and thixotropic, application by spray, extrusion, notched spatual or brush, tunable curing properties, primerless adhesion to many different substrates, outstanding weather resistance, high strength adhesives and low modulus sealants. A broad range of MS Polymer grades is available. These may differentiate in degree of functionalization (number and nature of groups attached to the backbone) (mono or bifunctional) and backbone structure in a wide viscosity range. Typically a dimethoxymethylsilyl terminated polyether or trimethoxysilyl terminated polyether is used.

It is known to blend a silyl terminated polyether with further components to improve e.g. stability. EP3825359 discloses a composition comprising a polyether having at least one reactive terminal silyl group and a stabilizer, wherein said stabilizer is a lignin and/or lignin derivative. A cured sheet made from such composition has desirable properties such as high stability and satisfactory mechanical properties such as tensile stress at elongation, tensile stress at break and elongation at break. While such composition is satisfactory for use in many applications, there is a constant need for improving its properties.

It is an objective of the present invention to provide a composition in which the above-mentioned and/or other needs are met.

Accordingly, the present invention provides a composition comprising (A) a polymer having at least one reactive silyl group selected from the group consisting of a polyether having at least one reactive silyl group, a (meth)acrylate-based polymer having at least one reactive silyl group, a polyisobutylene having at least one reactive silyl group and a silicone having at least one reactive silyl group and combinations thereof and (B) a lignin derivative having at least one functional group which is reactive with (A).

It was surprisingly found that a cured article made from the composition according to the invention has a good adhesion property. The cured article may further have a good thermal stability. Further, the composition according to the invention advantageously allows preparation of a cured article having a wide range of mechanical properties depending on needs. Further, since lignin is biobased, the addition of the lignin derivative increases the renewable content of the composition.

<u>Component (A)</u>

The composition according to the invention comprises (A) a polymer having at least one reactive silyl group, preferably a reactive terminal silyl group. Component (A) is selected from the group consisting of a polyether having at least one reactive silyl group, a (meth)acrylate-based polymer having at least one reactive silyl group, a polyisobutylene having at least one reactive silyl group and a silicone having at least one reactive silyl group and combinations thereof.

Polyether containing at least one reactive silyl group

Preferably, component (A) comprises a polyether having at least one reactive silyl group.

The amount of the polyether having at least one reactive silyl group with respect to the total amount of component (A) in the composition according to the invention may e.g. be 1 to 99 wt%, for example 5 to 95 wt%, 10 to 90 wt%, 20 to 80 wt%, 30 to 70 wt%, 40 to 60 wt% or 45 to 65 wt%.

Preferably, the amount of the polyether having at least one reactive silyl group with respect to the total amount of component (A) in the composition according to the invention is at least 50 wt%, for example at least 60 wt%, at least 70 wt%, at least 80 wt%, at least 90 wt% at least 95 wt%, at least 97 wt% or at least 99 wt%. Component (A) may consist of the polyether having at least one reactive silyl group.

The polyether containing at least one reactive silyl group for use in the present invention has as main skeleton a polyether polymer. As used herein the term "polyether/polyethers" designates a polyoxyalkylene group. Such a group may be represented by the formula $(C_mH_{2m}O)_y$ wherein m is from 2 to 4 inclusive and y is greater than 4 and may generally range from 5 to 1000 The polyoxyalkyene group may comprise oxyethylene units ($C_2H_4O$), oxypropylene 10 units ($C_3H_6O$), oxybutylene units ($C_4H_8O$), oxytetramethylene units or mixtures thereof. The main structure may be composed of only one kind of repeating oxyalkylene units or two or more kinds of repeating units. When mixtures are present (such as polyoxyethylene-polyoxypropylene copolymer) typically they are in the form of a random copolymer. According to a preferred embodiment of the present invention the polyether chain is a polyoxypropylene chain. The main chain structure of the polyether may be linear or may be branched. When the polymer has branched chains, the branched chain number is preferably 1 to 4, most preferably 1.

In some embodiments of the invention, the backbone skeleton of the reactive silyl-group containing polyether may contain other components such as a urethane bond component as long as the effect of the present invention is not significantly impaired. The urethane bond component is not particularly limited and examples thereof include groups (hereinafter also referred as amido segments) formed by reaction between an isocyanate group and an active hydrogen group. Such amido segments can be represented by the formula (1): -NR1-C(=O)- wherein R1 is an organic group having 1 to 10 carbon atoms or a hydrogen atom. The aforementioned segment specifically includes a urethane group produced by reaction of an isocyanate group and a hydroxyl group, or an amino group and carbonate; a urea group produced by reaction of an isocyanate group and an amino group; a thiourethane group produced by a reaction of an isocyanate group and a mercapto group and the like. Moreover a group produced by a further reaction of active hydrogen in the abovementioned urethane group, urea group and thioureagroup, and an isocyanate group is also encompassed in the group of formula (1). When the main chain of the polyether contains an amido segment, the number on average of the amido segment per molecule is preferably 1 to 50, more preferably 1.5 to 20, particularly preferably 2 to 10.

In some embodiments of the invention, the backbone skeleton of the reactive silyl-group containing polyether does not contain an urethane bond component.

Preferably, the amount of the polyoxyalkylene repeating units in the polyether containing at least one reactive silyl group is at least 50 wt%, more preferably at least 60 wt%, at least 70 wt%, at least 80 wt%, at least 90 wt% or at least 95 wt%.

The reactive silyl group of the polyether as used herein is a silicon-containing group having a hydroxyl group or a hydrolysable group bonded to a silicon atom and capable of forming a siloxane bond. The reactive silyl group is preferably represented by the formula (2):

$$-SiR^2{}_a y_{3-a}$$

wherein $R^2$ is a substituted or unsubstituted hydrocarbon group having 1 to 20 carbon atoms, each Y is independently a hydroxyl group or a hydrolysable group and a is 0 or 1. A reactive silyl group represented by formula (2) is a group crosslinkable by forming a siloxane bond by a reaction accelerated by a catalyst for silanol condensation. Examples of $R^2$ in the formula (2) include alkyl groups, such as methyl group, ethyl group and the like; cycloalkyl groups such as cyclohexyl group and the like; aryl groups such as phenyl group and the like; aralkyl groups such as benzyl group and the like; a triorganosiloxy group represented by $-OSi(R')_3$ wherein R' is methyl group, phenyl group and the like; fluoroalkyl groups such as fluoromethyl group, difluoromethyl group and the like; chloroalkyl groups such as chloromethyl group, 1-chloroethyl group and the like; alkoxyalkyl groups such as methoxymethyl group, ethoxymethyl group, phenoxymethyl group, 1-methoxyethyl group and the like; aminoalkyl groups such as aminomethyl group, N-methylaminomethyl group, N,N-dimethylaminomethyl group and the like; acetoxymethyl group, methylcarbamate group, 2-cyanoethyl group and the like. Of these, alkyl group is preferable, and methyl group is particularly preferable. As hydrolyzable group for Y in the formula (2), a known hydrolysable group can be mentioned. Examples of the hydrolysable group include a hydrogen, a halogen, an alkoxy group, an alkenyloxy group, an aryloxy group, an acyloxy group, a ketoxymate group, an amino group, an amido group, an acid amido group, an aminooxy group, a mercapto group and the like. Of these, a halogen, an alkoxy group, an alkyloxy group, and an acyloxy group are preferable with an alkoxy group as more preferable and

a methoxy and an ethoxy group as particularly preferable.

As the substituted or unsubstituted hydrocarbon group having 1 to 20 carbon atoms for $R^2$ in the formula (2), an alkyl group having 1 to 10 carbon atoms, an 5 aryl group having 6 to 10 carbon atoms or an aralkyl group having 7 to 10 carbon atoms is preferable, and these may be bonded to halogen atom, nitro group, amino group, cyano group or hydroxyl group as a substituent. As a reactive silyl group represented by the formula (2), trimethoxysilyl group, triethoxysilyl group, tris(2-propenyloxy) silyl group, triacetosilyl group, dimethoxymethylsilyl group, diethoxymethylsilyl group, diisopropoxymethylsilyl group, (chloromethyl)dimethoxysilyl group, (methoxymethyl)dimethoxysilyl group, (methoxymethyl)diethoxysilyl group, and (ethoxymethyl)dimethoxysilyl group are specifically preferable. Of these dimethoxymethylsilyl group, trimethoxysilyl group and triethoxysilyl are particularly preferable.

The polyethers for use according to the invention may have only one reactive silyl group or more than one. The average number of the reactive silyl groups per molecule of polyether is generally however not more than 6, preferably not more than 5. Preferably the average number of reactive silyl groups contained in the polyether is 1 to 4, more preferably 1.1 to 3, still more 20 preferably 1.3 to 2.5 and particularly preferably 1.5 to 2.3 per molecule. The reactive silyl groups are preferably located at terminal moieties of the main chain polyether structure.

The number average molecular weight of the polyether containing at least one reactive silyl group measured by gel permeation chromatography (GPC) is preferably not less than 2000, preferably not less than 8000. It is preferably not more than 60000, more preferably not more than 50000, particularly preferably not more than 35000.

Further detailed descriptions of suitable polyethers containing at least one reactive silyl group for use in the present invention and ways to prepare them are provided in US10150895 and EP 2684690.

Suitable examples of the polyether for use in the present invention are Kaneka's MS Polymers™ such as S203H, S303H, S227, S327, SAX 220, SAX 260, SAX 400, SAX 015, SAT 145, MAX 602, MAX 923, MAX 951, SAX 750, SAX 510, SAX 520, SAX 530, SAX 580, SAX 590, SAX575 MA451, MA480, MA850, 10 MA452 and MA490, in particular MS Polymer™ S303H, but other types of polyethers having at least one reactive silyl group, for example, silylated polyurethanes can also be used in the present invention

(Meth)acrylate-based polymer having at least one reactive silyl group

In some embodiments, component (A) comprises a (meth)acrylate-based polymer having at least one reactive silyl group.

The amount of the (meth)acrylate-based polymer having at least one reactive silyl group with respect to the total amount of component (A) in the composition according to the invention may e.g. be 1 to 99 wt%, for example 5 to 95 wt%, 10 to 90 wt%, 20 to 80 wt%, 30 to 70 wt%, 40 to 60 wt% or 45 to 65 wt%.

The amount of the (meth)acrylate-based polymer having at least one reactive silyl group with respect to the total amount of component (A) in the composition according to the invention may e.g. be at least 50 wt%, for example at least 60 wt%, at least 70 wt%, at least 80 wt%, at least 90 wt% at least 95 wt%, at least 97 wt% or at least 99 wt%. Component (A) may consist of the (meth)acrylate-based polymer having at least one reactive silyl group.

The amount of the (meth)acrylate-based polymer having at least one reactive silyl group with respect to the total amount of component (A) in the composition according to the invention may e.g. be at most 50 wt%, for example at most 40 wt%, at most 30 wt%, at most 20 wt%, at most 10 wt%, at most 5 wt%, at most 3 wt% or at most 1 wt%. Component (A) may be free of of the (meth)acrylate-based polymer having at least one reactive silyl group.

The main chain skeleton of the reactive silicon group-containing (meth)acrylate-based polymer is a polymer having an alkyl acrylate monomer unit and/or an alkyl methacrylate monomer unit having an alkyl group having 1-20 carbon atoms. Herein, "(meth)acryl" means "acryl and/or methacryl".

As the above-mentioned alkyl acrylate monomer unit having an alkyl group having 1-20 carbon atoms, a conventionally-known ones can be used widely and, for example, methyl acrylate, ethyl acrylate, n-propyl acrylate, n-butyl acrylate, isobutyl acrylate, tert-butyl acrylate, n-hexyl acrylate, 2-ethylhexyl acrylate, decyl acrylate, undecyl acrylate, lauryl acrylate, tridecyl acrylate, myristyl acrylate, cetyl acrylate, stearyl acrylate, behenyl acrylate, biphenyl acrylate and the like can be mentioned.

As the above-mentioned alkyl methacrylate monomer unit having 1-20 carbon atoms, a conventionally-known ones can be used widely and, for example, methyl methacrylate, ethyl methacrylate, n-propyl methacrylate, n-butyl methacrylate, isobutyl methacrylate, tert-butyl methacrylate, n-hexyl methacrylate, 2-ethylhexyl methacrylate, decyl methacrylate, undecyl methacrylate, lauryl methacrylate, tridecyl methacrylate, myristyl methacrylate, cetyl methacrylate, stearyl methacrylate, behenyl methacrylate, biphenyl methacrylate and the like can be mentioned. The presence of not less than 50 wt % of a alkyl (meth)acrylate monomer unit in (meth)acrylate-based polymer (a2) is preferable, and not less than 70 wt % is more preferable.

The (meth)acrylate-based polymer may have a weight average molecular weight of e.g. 500 to 100,000 based on polystyrene by GPC. Furthermore, one having 1,000-30,000 is preferable from the balance of strength and viscosity, and one having 1,500-10,000 is preferable from the aspects of easy handling such as workability and the like and

adhesiveness.

The reactive silyl group of the (meth)acrylate-based polymer as used herein may be those described as suitable for the reactive silyl group of the polyether.

Further description of the (meth)acrylate-based polymer having at least one reactive silyl group and preparation methods thereof can be found e.g. in US10150895, col. 10, l. 14 - col. 13, 1.37, incorporated herein by reference.

Polyisobutylene having at least one reactive silyl group

In some embodiments, component (A) comprises a polyisobutylene having at least one reactive silyl group.

The amount of the polyisobutylene having at least one reactive silyl group with respect to the total amount of component (A) in the composition according to the invention may e.g. be 1 to 99 wt%, for example 5 to 95 wt%, 10 to 90 wt%, 20 to 80 wt%, 30 to 70 wt%, 40 to 60 wt% or 45 to 65 wt%.

The amount of the polyisobutylene having at least one reactive silyl group with respect to the total amount of component (A) in the composition according to the invention may e.g. be at least 50 wt%, for example at least 60 wt%, at least 70 wt%, at least 80 wt%, at least 90 wt% at least 95 wt%, at least 97 wt% or at least 99 wt%. Component (A) may consist of the polyisobutylene having at least one reactive silyl group.

The amount of the polyisobutylene having at least one reactive silyl group with respect to the total amount of component (A) in the composition according to the invention may e.g. be at most 50 wt%, for example at most 40 wt%, at most 30 wt%, at most 20 wt%, at most 10 wt%, at most 5 wt%, at most 3 wt% or at most 1 wt%. Component (A) may be free of the polyisobutylene having at least one reactive silyl group.

The reactive silyl group of the polyisobutylene as used herein may be those described as suitable for the reactive silyl group of the polyether.

Silicone having at least one reactive silyl group

In some embodiments, component (A) comprises a silicone having at least one reactive silyl group.

The amount of the silicone having at least one reactive silyl group with respect to the total amount of component (A) in the composition according to the invention may e.g. be 1 to 99 wt%, for example 5 to 95 wt%, 10 to 90 wt%, 20 to 80 wt%, 30 to 70 wt%, 40 to 60 wt% or 45 to 65 wt%.

The amount of the silicone having at least one reactive silyl group with respect to the total amount of component (A) in the composition according to the invention may e.g. be at least 50 wt%, for example at least 60 wt%, at least 70 wt%, at least 80 wt%, at least 90 wt% at least 95 wt%, at least 97 wt% or at least 99 wt%. Component (A) may consist of the silicone having at least one reactive silyl group.

The amount of the silicone having at least one reactive silyl group with respect to the total amount of component (A) in the composition according to the invention may e.g. be at most 50 wt%, for example at most 40 wt%, at most 30 wt%, at most 20 wt%, at most 10 wt%, at most 5 wt%, at most 3 wt% or at most 1 wt%. Component (A) may be free of the silicone having at least one reactive silyl group.

The reactive silyl group of the silicone as used herein may be those described as suitable for the reactive silyl group of the polyether.

Component (B)

The composition according to the invention comprises (B) a lignin derivative having at least one functional group which is reactive with (A), in particular with the reactive silyl group of (A). Preferably, the functional group of (B) is a reactive silyl group, preferably reactive terminal silyl group.

The lignin derivative having at least one functional group such as reactive silyl group may be obtained by subjecting a lignin derivative having a hydroxyl group (herein sometimes referred as a precursor) and modifying the hydroxyl group into the functional group such as the reactive silyl group. The term "lignin derivative having a hydroxyl group" herein includes monophenolic compounds represented e.g. by formula (I) and diphenolic compounds represented e.g. by formula (II)-(VII) as well as polyphenolic compounds obtainable from lignin. Accordingly, the lignin derivatives having a hydroxyl group used in the present invention include those obtained from lignin by known methods such as depolymerization, filtration, fractionation as well as those which have been synthesized without use of lignin. Preferably, however, the lignin derivatives having a hydroxyl group used in the present invention are those obtained from lignin.

The amount of component (B) is generally in the range of 1 to 25 parts by weight, preferably 3 to 20 parts by weight, based on the total amount of component (A) and component (B) which is set as 100 parts by weight.

In some embodiments, the amount of component (B) is 1 to 7 parts by weight, preferably 3 to 7 parts by weight, based on the total amount of component (A) and component (B) which is set as 100 parts by weight.

In some embodiments, the amount of component (B) is 7 to 12 parts by weight based on the total amount of

component (A) and component (B) which is set as 100 parts by weight.

In some embodiments, the amount of component (B) is 12 to 25 parts by weight, preferably 12 to 20 parts by weight, based on the total amount of component (A) and component (B) which is set as 100 parts by weight. This may lead to a particularly good adhesion property to various substrates.

Preferably, the lignin derivative having at least one functional group such as reactive silyl group has a weight average molecular weight of below 5000, more preferably below 3000 g/mol, as determined by Gel Permeation Chromatography (GPC). This leads to a high compatibility/solubility with the polymer containing at least one reactive silyl group. Compatibility in this respect may be defined as a measure of how stable the lignin or lignin derivative is when and after being mixed with the polymer at least one reactive silyl group.

In some embodiments, the lignin derivative having at least one functional group such as reactive silyl group has weight average molecular weight of 100 to 1000 as determined by Gel Permeation Chromatography. This leads to a low modulus and a high elongation at break of the cured product made from the composition according to the invention. This further leads to a high thermal stability of the cured product made from the composition according to the invention.

In some embodiments, the lignin derivative having at least one functional group such as reactive silyl group has weight average molecular weight of 100 to 300 as determined by Gel Permeation Chromatography. This leads to a particularly low modulus and a particularly high elongation at break of the cured product made from the composition according to the invention.

In some embodiments, the lignin derivative having at least one functional group such as reactive silyl group has weight average molecular weight of 300 to 1000 as determined by Gel Permeation Chromatography. This leads to a particularly high thermal stability of the cured product made from the composition according to the invention.

In some embodiments, the lignin derivative having at least one functional group such as reactive silyl group has weight average molecular weight of 1000 to 5000, preferably 1000 to 3000, as determined by Gel Permeation Chromatography. This leads to a high modulus and a low elongation at break of the cured product made from the composition according to the invention. This further leads to a high thermal stability of the cured product made from the composition according to the invention. The composition has a particularly good adhesion property to various substrates.

In some embodiments, the amount of component (B) is 12 to 25 parts by weight, preferably 12 to 20 parts by weight, based on the total amount of component (A) and component (B) which is set as 100 parts by weight and the lignin derivative having at least one reactive silyl group has weight average molecular weight of 1000 to 5000, preferably 1000 to 3000, as determined by Gel Permeation Chromatography. The composition has a particularly good adhesion property to various substrates.

In some embodiments, the lignin derivative having at least one functional group such as reactive silyl group comprises a group represented by -OR, wherein R is a silyl group containing at least one alkoxy group, and preferably two or three alkoxy groups. Particularly preferably, R is propyl (dimethoxymethyl)silane or propyl trimethoxysilane.

## Precursor

Native lignin, being a major constituent in structural cell walls of plants, has a polyphenolic structure. The monomeric units of phenylpropane in lignin polymers are linked in a complex network trough different types of ether and ester bonds as well as carbon-carbon bonds. Lignin is separated from the other lignocellulosic parts of plants by physical and/or chemical means. Not only the botanical source, but also the delignification (pulping) process and extraction processes will highly influence the lignin structure, purity and properties.

During the delignification of biomass ester and ether linkages will be largely disrupted and lignin fragments will be dissolved in the pulping liquor. The resulting technical lignin will differ significantly compared to the original lignin in the biomass. The variation in technical lignin structure is partly caused by the botanical origin of the polyphenol but equally important is the method of extraction.

Common pulping processes used for the extraction of lignin from lignocellulosic raw materials include sulfate or kraft pulping process (kraft lignin), sulfite pulping process (lignosulfonates), soda pulping process (soda lignin), organosolv pulping and/or fractionation process (organosolv lignin which is generally of high quality and purity).

The lignin derivative can be derived from any type of lignin such as kraft lignin, lignosulfonate, soda lignin, organosolv lignin and others. The lignin derivate may be derived from lignin having a molecular weight that can vary e.g. between 1000 and 300000 Da.

At least three approaches are known for significantly reducing the molecular weight of the lignin to said ranges.

For example, the lignin can be depolymerized into monomers and oligomers. Acid-, base-, metal-catalyzed as well as ionic liquid-assisted, sub- and supercritical fluids-assisted depolymerisations are possible. After depolymerization one obtains a mixture of phenolic monomers, dimers and oligomers which can be further separated. Further descriptions of such suitable depolymerisations can be found in "Biobased Epoxy Resins from Deconstructed Native Softwood Lignin" by Van de Pas D.J. & Tor K.M. in Biomacromolecules (2017), "Chemicals from lignin: an interplay of lignocellulose fractionation, depolymerisation and upgrading" by Sels S.B.F. in Chem. Soc. Rev, 47 (2018), p 852-908 and "Biofuels

and Biomass Depolymerisation of lignin over Ni-Pd bimetallic catalyst using isopropanol as in situ hydrogen source" by Jiang B., Hu J., Qiao Y., Jiang X. & Lu P. in Energy & Fuels (2019).

Another approach involves ultrafiltration with membrane. Membrane separation techniques can be used to fractionate lignin liquor and lower molecular weight compounds up to 500 Da. Further information on said techniques can be found in "Lignin fractionation from E. Globulus kraft liquor by ultrafiltration in a three stage membrane sequence" by Costa C.A.E., Pinto 5 P.C.R. & Rodrigues A.E. in Sep. Purif. Technol. 192 (2018) p 140-151, "Characterisation of Kraft Lignin Fractions Obtained by Sequential Ultrafiltration and Their potential application as a biobased component in blends with polyethylene" by Huang C., He J., Naroon R., Wang Y. & Yong Q. in ACS Sustain. Chem. Eng. (2017) and "Membrane filtration of kraft lignin: structural characteristics and antioxidant activity of low-molecular-weight fraction" by Aminsadeh S., Lauberts M., Dobele G, Ponomarenko J. & Mattsson T. in Ind. Crop. Prod. 112 (2018) p 200-209.

A third approach involves solvent fractionation: an organic solvent or solvent mixture can be used at atmospheric pressure and room temperature or refluxing temperature to reduce the molecular weight and heterogeneity of lignin. For instance ethyl acetate has been used to isolate lignin fraction with molecular weight below 1000 Da. See "Fractionation of five technical lignins by selective extraction in green solvents and characterisation of isolated fractions" by Boeriu, C. G., Fit, I., Stoutjesdijk, J. & Peter, F. in Ind. Crop. Prod. 62 (2014) p 481-490, "Exploring the application potential of incompletely soluble organosolv lignin as a macromonomer for polyurethane synthesis" by Arshanitsa, A., Krumina, L., Telysheva, G. & Dizhbite T. in Ind. Crop. Prod. 92 (2016) p 1-12 and "Effect of molecular size of lignin on the formation of aromatic hydrocarbon during zeolite catalyzed pyrolysis" by Kim, J. & Choi, J. W. in Fuel 240 (2019) p 92-100.

Preferably, the lignin derivative having a hydroxyl group is obtained by subjecting native lignin or technical lignin to depolymerization or fractionation.

Suitable examples of the lignin derivative having a hydroxyl group include those represented by general formula (I)-(VII):

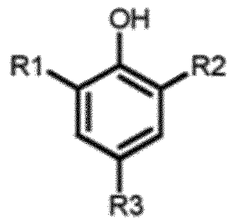

(I)

wherein each of R1 and R2 represents -H, -OH or $-OCH_3$ and
R3 represents $-CH_2CH_3$, $-(CH_2)_2CH_3$, $-(CH)_2CH_3$, $-CH_2CHCH_2$, or $-(CH_2)_2CH_2OH$;

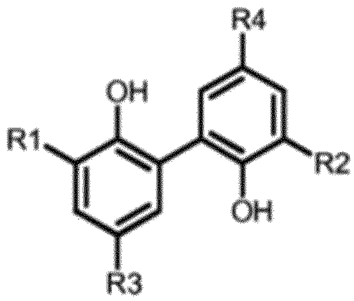

(II)

wherein each of R1 and R2 represents -H, -OH or $-OCH_3$ and
each of R3 and R4 represents $-CH_2CH_3$, $-(CH_2)_2CH_3$, $-(CH)_2CH_3$, $-CH_2CHCH_2$ or - $(CH_2)_2CH_2OH$;

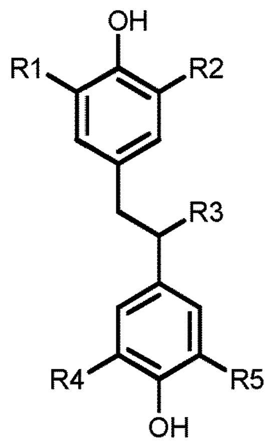

(III)

wherein each of R1, R2, R4 and R5 represents -H, -OH, or $-OCH_3$ and $R_3$ represents -H, $-CH_3$ or $-CH_2OH$;

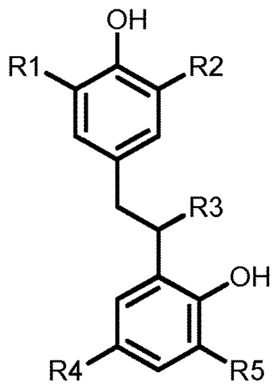

(IV)

wherein each of R1, R2 and R5 represents -H, -OH or $-OCH_3$,
R3 represents -H, $-CH_3$ or $-CH_2OH$ and
R4 represents $-CH_2CH_3$, $-(CH_2)_2CH_3$, $-(CH)_2CH_3$, $-CH_2CHCH_2$ or $-(CH_2)_2CH_2OH$;

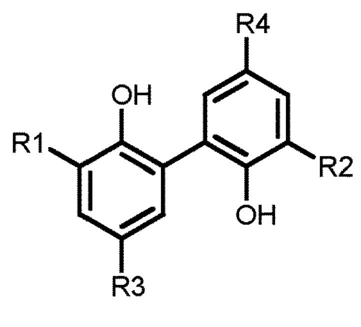

(V)

wherein each of R1 and R2 represents -H, -OH or $-OCH_3$ and
each of R3 and R4 represents $-CH_2CH_3$, $-(CH_2)_2CH_3$, $-(CH)_2CH_3$, $-CH_2CHCH_2$ or - $(CH_2)_2CH_2OH$;

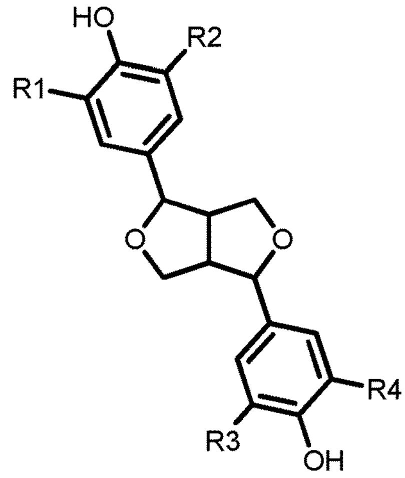

(VI)

wherein each of R1, R2, R3 and R4 represents -H, -OH or $-OCH_3$;

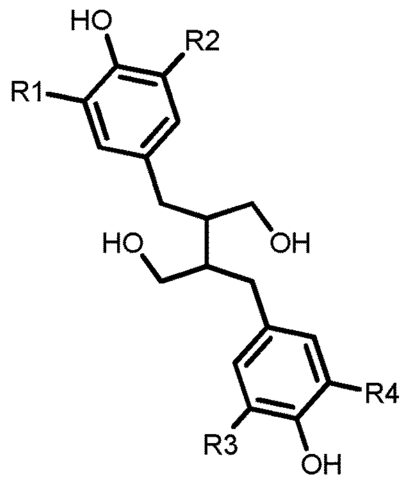

(VII)

wherein each of R1, R2, R3 and R4 represents -H, -OH or $-OCH_3$.

In some preferred embodiments, the lignin derivative having a hydroxyl group is propanol-guaiacol, propanol-syringol, propyl-guaiacol or propyl-syringol.

Silylation

The reactive silyl group may be introduced to the lignin derivative having a hydroxyl group e.g. by a reaction of the hydroxyl group of the precursor with a compound having both a group that reacts with the hydroxyl group of the precursor to form a bond and a reactive silicon group (also called silane coupling agent).

Examples of the group that reacts with the hydroxyl group of the precursor include an isocyanate group and an epoxy group.

Examples of the silane coupling agent comprising an isocyanate group include 3-isocyanatepropyltrimethoxysilane, 3-isocyanatepropyldimethoxymethylsilane, 3-isocyanatepropyltriethoxysilane, isocyanatemethyltrimethoxysilane, isocyanatemethyltriethoxysilane and isocyanatemethyldimethoxymethylsilane.

Examples of the silane coupling agent comprising an epoxy group include 3-glycidoxypropyltrimethoxysilane, 3-glycidoxypropyldimethoxymethylsilane, 3-glycidoxypropyltriethoxysilane, glycidoxymethyltrimethoxysilane, glycidoxymethyltriethoxysilane and glycidoxymethyldimethoxymethylsilane.

Other methods of the silylation include reacting the lignin derivative having a hydroxyl group with e.g. an allyl halide (such as allyl bromide) and subsequently reacting the resulting allylated compound with an alkoxy alkyl silane such as dimethoxymethylsilane.

In some embodiments, the total amount of (A) and (B) with respect to the composition is at least 50 wt%, for

example at least 60 wt%, at least 70 wt%, at least 80 wt%, at least 90 wt%, at least 95 wt% at least 97 wt%, at least 99 wt% or 100 wt%.

Component (C)

The composition of the present invention may further contain (C) additives. Suitable additives can be selected from catalysts, rheology control agents such as thixotropic agents (e.g. polyamide waxes, fumed silica), pigments (e.g. $TiO_2$, carbon black), antioxidants, UV and light stabilizers (e.g. hindered phenol antioxidants), adhesion promotors (e.g. amino/epoxysilanes), plasticizers (e.g. phthalates, PPG), dihydrogen agents, fillers (e.g. talc, fumed silica, silica, calcium carbonate).

The amount of component (C) is generally in the range 1 to 1000 parts by weight based on the amount of component (A) which is set as 100 parts by weight.

In some embodiments, the amount of the fillers is in the range 100 to 300 parts by weight based on the amount of component (A) which is set as 100 parts by weight.

The total amount of (A), (B) and (C) with respect to the composition may be 100 wt%.

A blend may be made of the composition according to the invention and epoxy and/or bitumen in any weight ratio, for example 1:10 to 10:1.

Further aspects

The composition of the invention may be obtained by a process comprising mixing components (A) and (B) and the optional component (C) at a temperature of e.g. between 50°C and 120°C, preferably 60°C to 100°C. Accordingly, the invention further relates to a process for the preparation of the composition according to the invention comprising mixing components (A) and (B) and optionally (C) e.g. at a temperature of between 50°C and 120°C, preferably 60°C to 100°C.

The composition of the present invention can be used as binder, coating, sealant or adhesive, or any other application for which silyl terminated polyethers are generally used. Accordingly, the invention further relates to binder, coating, sealant or adhesive, or any other application for which silyl terminated polyethers are generally used comprising the composition of the present invention.

The invention further relates to a method for bonding a first substrate and a second substrate by providing the composition according to the invention in contact with the first substrate and the second substrate and curing the composition according to the invention.

Each of the first substrate and of the second substrate may independently be made e.g. of a material selected from the group consisting of anodized aluminum, steel, polyvinyl chloride (PVC), acrylonitrile-butadiene-styrene (ABS), polycarbonate (PC), glass and beech wood. The first substrate and the second substrate may be made of the same material or different materials.

The invention further relates to use of a lignin derivative having at least one functional group such as reactive silyl group for decreasing the tensile modulus and/or increasing the elongation at break of a cured product of a composition comprising a polymer having at least one reactive silyl group selected from the group consisting of a polyether having at least one reactive silyl group, a (meth)acrylate-based polymer having at least one reactive silyl group, a polyisobutylene having at least one reactive silyl group and a silicone having at least one reactive silyl group and combinations thereof.

The invention further relates to use of a lignin derivative having at least one functional group such as reactive silyl group for increasing the tensile modulus and/or decreasing the elongation at break of a cured product of a composition comprising a polymer having at least one reactive silyl group selected from the group consisting of a polyether having at least one reactive silyl group, a (meth)acrylate-based polymer having at least one reactive silyl group, a polyisobutylene having at least one reactive silyl group and a silicone having at least one reactive silyl group and combinations thereof.

The invention further relates to use of a lignin derivative having at least one functional group such as reactive silyl group as a thermal stabilizer for a cured product of a composition comprising a polymer having at least one reactive silyl group selected from the group consisting of a polyether having at least one reactive silyl group, a (meth)acrylate-based polymer having at least one reactive silyl group, a polyisobutylene having at least one reactive silyl group and a silicone having at least one reactive silyl group and combinations thereof.

Preferably, the cured product of the composition according to the invention has a thermal degradation temperature (temperature at which thermal degradation of the cured product of the composition starts as determined by Differential Scanning Calorimetry (DSC)) which is at least 50°C higher than a thermal degradation temperature of a cured product of a reference composition consisting of the same components as said composition according to the invention in the absence of the lignin derivative having at least one functional group such as reactive silyl group.

Preferably, the cured product of the composition according to the invention has a stable period which is at least 14 days longer than a stable period of a cured product of a reference composition consisting of the same components

as said composition according to the invention in the absence of the lignin derivative having at least one functional group such as reactive silyl group. The stable period is determined by measuring Shore A hardness of the cured product over time starting from the provision of the cured product. The stable period is determined to have ended when the decrease in the Shore A hardness compared to becomes at least 10 points.

It is noted that the invention relates to the subject-matter defined in the independent claims alone or in combination with any possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

MS Polymer™ S303H: silyl-terminated polyether available from Kaneka

PG: 2-methoxy-4-propylphenol (propyl guaiacol) whose molecular weight is 166 g/mol obtained from Merck Life Science (Sigma Aldrich), 99% pure

PGD: Propyl guaiacol dimer whose molecular weight is 330 g/mol synthesized from PG using Novozymes 51003 (biocatalyst enzyme)

BO: BO lignin oligomer obtained by reductive catalytic depolymerization whose molecular weight is 1150

KL (EtOAc): Kraft lignin oligomer obtained by extraction with ethyl acetate, whose molecular weight is 1088

KL (EMK): Kraft lignin oligomer obtained by extraction with ethyl methyl ketone, whose molecular weight is 2275

nA-PG: silyl functionalized PG which was obtained by a reaction between hydroxy group of PG and t-Butyldimethylchlorosilane with a reaction ratio of 100%; and whose molecular weight is 280 g/mol

nA-PGD: silyl functionalized PGD which was obtained by a reaction between hydroxy group of PGD and t-Butyldimethylchlorosilane with a reaction ratio of 100%; and whose molecular weight is 558 g/mol

nA-BO: silyl functionalized BO which was obtained by a reaction between hydroxy group of BO and t-Butyldimethylchlorosilane with a reaction ratio of 100%; and whose molecular weight is about 1500 g/mol

Si-KL (EtOAc): silyl functionalized KL (EtOAc) which was obtained by a reaction between hydroxy group of KL (EtOAc) and t-Butyldimethylchlorosilane with a reaction ratio of 100%

Si-KL (EMK): silyl functionalized KL (EMK) which was obtained by a reaction between hydroxy group of KL (EtOAc)and t-Butyldimethylchlorosilane with a reaction ratio of 100%

A-PG: silyl functionalized PG whose molecular weight is 270 g/mol

A-PGD: silyl functionalized PGD whose molecular weight is 538 g/mol

A-BO: silyl functionalized BO whose molecular weight is about 1500 g/mol

A-PG, A-PGD and A-BO were obtained as follows:

PG, PGD and BO were reacted with allyl bromide in the presence of potassium carbonate to obtain allylated PG, PGD and BO. The allylated PG, PGD and BO were reacted with dimethoxymethyl silane in the presence of Kardstedt's catalyst to obtain A-PG, A-PGD and A-BO.

Experiment set 1: properties of compositions containing different types of lignin

Various compositions were made by mixing components as shown in Table 1 (in weight part).

Cured sheets of each sample were prepared according to the following method. Preparation method of cured sheet: Into 100 parts by weight of the polymer sample was incorporated 3.0 parts by weight of tin octylate, 0.5 parts by weight of laurylamine, and 0.6 parts by weight of water into even state while the polymer composition was being stirred. The resultant mixture was centrifuged to be defoamed and subsequently a mold frame made of polyethylene was filled with the mixture in such a way so as not to put air bubbles into the frame. The mixture was cured at 23°C and 50% RH for 1 hour and further cured at 70°C for 20 hours to produce a sheet having a thickness of about 3mm.

On the cured sheet, tensile tests and heat stability test were performed using the following methods.

Tensile test method: Cured sheets were punched out into #3-dumbbell form samples and these were subjected

to a tensile strength test at 23°C and 50% RH to measure the stress at 50% elongation(M50), the tensile strength at break(Tb), and the elongation at break(Eb). The tensile strength was measured at a tensile rate of 200mm/min, with an autograph(AGS-J) manufactured by Shimadzu Corp. The values shown for M50 and Tb are in MPa. The values shown for Eb are in %.

Thermal stability test method: Thermal stability of the cured sheets was measured with DSC measurement machine. Its heating rate was 2°C/min.

$T_{onset}$ = temperature at which thermal degradation of the sample starts, measured with DSC

$$\Delta T_{onset} = T_{onset}\,(\text{sample}) - T_{onset}\,(\text{CEx 1}) = \text{increase in } T_{onset} \text{ after blending}$$

All analysis results are shown in Table 1.

Table 1

| | CEx 1 | CEx 2 | CEx 3 | CEx 4 | CEx 5 | CEx 6 | Ex 7 | Ex 8 | Ex 9 | Ex 10 | Ex 11 | Ex12 |
|---|---|---|---|---|---|---|---|---|---|---|---|---|
| S303H | 100 | 95 | 95 | 95 | 95 | 95 | 95 | 90 | 95 | 90 | 95 | 85 |
| nA-PG | | 5 | | | | | | | | | | |
| nA-PGD | | | 5 | | | | | | | | | |
| nA-BO | | | | 5 | | | | | | | | |
| Si-KL (EtOAc ) | | | | | 5 | | | | | | | |
| Si-KL (EMK) | | | | | | 5 | | | | | | |
| A-PG | | | | | | | 5 | 10 | | | | |
| A-PGD | | | | | | | | | 5 | 10 | | |
| A-BO | | | | | | | | | | | 5 | 15 |
| catalyst | 3.5 | 3.5 | 3.5 | 3.5 | 3.5 | 3.5 | 3.5 | 3.5 | 3.5 | 3.5 | 3.5 | 3.5 |
| water | 0.6 | 0.6 | 0.6 | 0.6 | 0.6 | 0.6 | 0.6 | 0.6 | 0.6 | 0.6 | 0.6 | 0.6 |
| | | | | | | | | | | | | |
| M50 | 0.22 | 0.20 | 0.20 | 0.13 | 0.08 | 0.19 | 0.18 | 0.12 | 0.19 | 0.16 | 0.28 | 0.35 |
| Tb | 0.42 | 0.40 | 0.44 | 0.39 | 0.35 | 0.46 | 0.49 | 0.40 | 0.49 | 0.41 | 0.41 | 0.43 |
| Eb | 143 | 148 | 166 | 262 | 416 | 201 | 236 | 297 | 219 | 207 | 91 | 66 |
| $\Delta T_{onset}$ | - | 0 | 10 | 19 | 3 | 7 | 22 | 25 | 53 | 60 | 16 | 33 |

From Table 1, it can be understood that the addition of the reactive lignin according to the invention allows adjusting the tensile modulus and elongation at break to a wide range. In particular, the addition of the reactive lignin according to the invention allows decreasing the tensile modulus and increasing the elongation at break (Ex 7-10) as well as increasing the tensile modulus and decreasing the elongation at break (Ex 11-12). In comparison, the addition of a non-reactive lignin allows only decreasing the tensile modulus and increasing the elongation at break (CEx 2-6). Further, the effect on the tensile modulus and the elongation at break is larger with the addition of the reactive lignin than the addition of the non-reactive lignin (CEx 2 vs Ex 7; CEx 3 vs Ex 9; CEx 4 vs Ex 11).

The addition of the reactive lignin according to the invention results in a higher thermal stability (CEx 1 vs Ex 7-12). The effect on the thermal stability by the addition of the reactive lignin is larger than the addition of the non-reactive lignin (CEx 2 vs Ex 7; CEx 3 vs Ex 9) or similar to the addition of the non-reactive lignin (CEx 4 vs Ex 11).

<u>Experiment set 2: adhesion of compositions containing different types of lignin</u>

Into 100 parts by weight of MS polymer™ S303H or a mixture of MS polymer™ and a lignin derivative were incorporated 50 parts by weight of diisononyl phthalate(DINP, manufactured by ExxonMobil), 120 parts by weight of precipitated calcium carbonate (HAKUENKA CCR, manufactured by Shiraishi Calcium Kaisha, Ltd.) and 20 parts by

weight of titanium oxide (Ti Pure, manufactured by Chemours), 5 parts by weight of amide wax(CLAYVALLAC SLT, manufactured by Claverley), 1 parts by weight of Tinuvin 326(manufactured by BASF), 1 parts by weight of Irganox 245(manufactured by BASF), and 1 parts by weight of Tinuvin 770 (manufactured by BASF). A three-roll machine was used to disperse components into an even (equilibrium) state. Thereafter, thereto were added 2 parts by weight of vinyltrimethoxysilane (Dynasilan VTMO, manufactured by Evonik), 3 parts by weight of 3-aminopropyltrimethoxysilane (Dynasilan AMMO, manufactured by Evonik), and 1.8 parts by weight of dioctyltin diketaboate(manufactured by TIBCHEMICALS), and all the components were sufficiently mixed with each other with a spatula. An autorotation/orbital-revolution mixer was then used to mix the components with each other into an even state, and defoam the mixture. The composition was used to fill a mold frame, and cured at 23°C and 50% RH for 3 days, and further cured at 50°C for 4 days to produce a sheet-form cured product having a thickness of about 3mm.

Adhesion to various substrates were tested as follows:
The composition was applied onto the substrate. The composition was cured at 23 °C for 7 days. A 90° hand peel test was performed to determine the failure mode on the substrate. The failure mode was categorized as follows:

A: 100% of cohesion failure
B: more than 50% and less than 100% of cohesive failure
C: more than 0% and less than 50% of cohesive failure
D: 100% of adhesive failure (=0% of cohesive failure)

Thermal stability = maximum time at 120°C for which the decrease in Shore A hardness remains less than 10 points

Table 2

| | CEx 1A | CEx 4A | Ex 7A | Ex 9A | Ex 10A | Ex 11A | Ex12A |
|---|---|---|---|---|---|---|---|
| S303H | 100 | 95 | 95 | 95 | 90 | 95 | 85 |
| nA-BO | | 5 | | | | | |
| A-PG | | | 5 | | | | |
| A-PGD | | | | 5 | 10 | | |
| A-BO | | | | | | 5 | 15 |
| adhesion | | | | | | | |
| ABS | D | D | D | D | C | D | A |
| Glass | C | C | A | A | A | A | A |
| thermal stability | 11 | 14-21 | 21 | 28-35 | 56-70 | 28 | 35-42 |

The addition of the reactive lignin according to the invention results in a higher thermal stability (CEx 1A vs Ex 9A-12A). The effect on the thermal stability by the addition of the reactive lignin is larger than the addition of the non-reactive lignin (CEx 4A vs Ex 7A and Ex 9A-12A).

The addition of the reactive lignin according to the invention results in a higher adhesion to the substrates (CEx 1A vs Ex 7A and Ex 9A-12A). The effect on the adhesion by the addition of the reactive lignin is larger than the addition of the non-reactive lignin on the substrates (CEx 4A vs Ex 7A and Ex 9A-12A).

The composition of Ex 12A allowed an excellent adhesion to ABS which was not possible with CEx 1A, CEx 4A or Ex 11A.

The composition according to the invention allowed an excellent adhesion to glass which was not possible with CEx 1A or CEx 4A.

Further adhesion tests were performed using PVC as the substrate. The composition according to the invention showed better adhesion to PVC than compositions not according to the invention.

## Claims

1. A composition comprising (A) a polymer having at least one reactive silyl group selected from the group consisting of a polyether having at least one reactive silyl group, a (meth)acrylate-based polymer having at least one reactive silyl group, a polyisobutylene having at least one reactive silyl group and a silicone having at least one reactive silyl

group and combinations thereof and (B) a lignin derivative having at least one functional group which is reactive with component (A).

2. The composition according to claim 1, wherein the functional group of component (B) is a reactive silyl group.

3. The composition according to one of the preceding claims, wherein component (A) comprises the polyether having at least one reactive silyl group, preferably wherein the amount of the polyether having at least one reactive silyl group with respect to the total amount of component (A) is at least 50 wt%, for example at least 60 wt%, at least 70 wt%, at least 80 wt%, at least 90 wt% at least 95 wt%, at least 97 wt% or at least 99 wt%.

4. The composition according to claim one of the preceding claims, wherein the reactive silyl group of component (A) is a silyl group containing at least one alkoxy group, preferably two or three alkoxy groups and is preferably selected from at least one of methyl dimethoxy silyl group, trimethoxy silyl group and triethoxy silyl group.

5. The composition according to any one of the preceding claims, wherein component (B) comprises a group represented by -OR, wherein R is a silyl group containing at least one alkoxy group, preferably two or three alkoxy groups, particularly preferably R is propyl (dimethoxymethyl)silane or propyl trimethoxysilane.

6. The composition according to any one of the preceding claims, wherein (B) has weight average molecular weight as determined by Gel Permeation Chromatography of below 5000 g/mol, preferably below 3000 g/mol.

7. The composition according to any one of claims 1 to 6, wherein the (B) has weight average molecular weight as determined by Gel Permeation Chromatography of 100 to 1000 g/mol, for example 100 to 300 or 300 to 1000 g/mol.

8. The composition according to any one of claims 1 to 6, wherein the lignin derivative having at least one reactive silyl group has weight average molecular weight as determined by Gel Permeation Chromatography of 1000 to 5000, preferably 1000 to 3000.

9. The composition according to any one of the preceding claims wherein the amount of component (B) is 1 to 25 parts by weight, preferably 3 to 20 parts by weight, based on the total amount of component (A) and component (B) which is set as 100 parts by weight.

10. The composition according to any one of claims 1 to 9, wherein the amount of component (B) is 1 to 12 parts by weight, for example 1 to 7 parts by weight or 7 to 12 parts by weight, based on the total amount of component (A) and component (B) which is set as 100 parts by weight.

11. The composition according to any one of claims 1 to 9, wherein the amount of component (B) is 12 to 25 parts by weight, preferably 12 to 20 parts by weight, based on the total amount of component (A) and component (B) which is set as 100 parts by weight.

12. The composition according to any one of the preceding claims further comprising (C) at least one additive preferably selected from the group consisting of catalysts, rheology control agents, pigments, anti-oxidants, UV and light stabilizers, adhesion promotors, plasticizers, dihydrogen agents and fillers.

13. A cured product obtained by curing the composition according to any one of claims 1 to 12.

14. Use of the composition as defined in any one of claims 1 to 12 as a binder, coating, sealant or adhesive.

15. A bonded structure comprising a first substrate and a second substrate obtained by a method comprising the steps of bringing the composition according to any one of claims 1 to 12 into contact with the first substrate and the second substrate and curing the composition.

## Patentansprüche

1. Zusammensetzung umfassend (A) ein Polymer mit wenigstens einer reaktionsfähigen Silylgruppe ausgewählt aus der Gruppe bestehend aus einem Polyether mit wenigstens einer reaktionsfähigen Silylgruppe, einem Polymer auf (Meth)acrylatbasis mit wenigstens einer reaktionsfähigen Silylgruppe, einem Polyisobutylen mit wenigstens einer

reaktionsfähigen Silylgruppe und einem Silicon mit wenigstens einer reaktionsfähigen Silylgruppe und Kombinationen davon, und (B) ein Ligninderivat mit wenigstens einer funktionellen Gruppe, die mit Komponente (A) reaktionsfähig ist.

**2.** Zusammensetzung gemäß Anspruch 1, wobei die funktionelle Gruppe von Komponente (B) eine reaktionsfähige Silylgruppe ist.

**3.** Zusammensetzung gemäß einem der vorstehenden Ansprüche, wobei Komponente (A) den Polyether mit wenigstens einer reaktionsfähigen Silylgruppe umfasst, wobei die Menge des Polyethers mit wenigstens einer reaktionsfähigen Silylgruppe bezogen auf die Gesamtmenge der Komponente (A) vorzugsweise wenigstens 50 Gew.-% beträgt, beispielsweise wenigstens 60 Gew.-%, wenigstens 70 Gew.-%, wenigstens 80 Gew.-%, wenigstens 90 Gew.-% wenigstens 95 Gew.-%, wenigstens 97 Gew.-% oder wenigstens 99 Gew.-%.

**4.** Zusammensetzung gemäß einem der vorstehenden Ansprüche, wobei die reaktionsfähige Silylgruppe von Komponente (A) eine Silylgruppe ist, die wenigstens eine Alkoxygruppe enthält, vorzugsweise zwei oder drei Alkoxygruppen, und vorzugsweise ausgewählt ist aus wenigstens einem von Methyldimethoxysilylgruppe, Trimethoxysilylgruppe und Triethoxysilylgruppe.

**5.** Zusammensetzung gemäß einem der vorstehenden Ansprüche, wobei Komponente (B) eine Gruppe dargestellt durch -OR umfasst, wobei R eine Silylgruppe ist, die wenigstens eine Alkoxygruppe enthält, vorzugsweise zwei oder drei Alkoxygruppen, wobei besonders bevorzugt R Propyl(dimethoxymethyl)silan oder Propyltrimethoxysilan ist.

**6.** Zusammensetzung gemäß einem der vorstehenden Ansprüche, wobei (B) ein gewichtsgemitteltes Molekulargewicht, wie bestimmt durch Gelpermeationschromatographie, von kleiner als 5000 g/mol, vorzugsweise kleiner als 3000 g/mol, aufweist.

**7.** Zusammensetzung gemäß einem der Ansprüche 1 bis 6, wobei (B) ein gewichtsgemitteltes Molekulargewicht, wie bestimmt durch Gelpermeationschromatographie, von 100 bis 1000 g/mol, beispielsweise 100 bis 300 oder 300 bis 1000 g/mol, aufweist.

**8.** Zusammensetzung gemäß einem der Ansprüche 1 bis 6, wobei das Ligninderivat mit wenigstens einer reaktionsfähigen Silylgruppe ein gewichtsgemitteltes Molekulargewicht, wie bestimmt durch Gelpermeationschromatographie, von 1000 bis 5000, vorzugsweise 1000 bis 3000, aufweist.

**9.** Zusammensetzung gemäß einem der vorstehenden Ansprüche, wobei die Menge an Komponente (B) 1 bis 25 Gewichtsteile, vorzugsweise 3 bis 20 Gewichtsteile, bezogen auf die Gesamtmenge von Komponente (A) und Komponente (B), die als 100 Gewichtsteile festgelegt ist, beträgt.

**10.** Zusammensetzung gemäß einem der Ansprüche 1 bis 9, wobei die Menge an Komponente (B) 1 bis 12 Gewichtsteile, beispielsweise 1 bis 7 Gewichtsteile oder 7 bis 12 Gewichtsteile, bezogen auf die Gesamtmenge von Komponente (A) und Komponente (B), die als 100 Gewichtsteile festgelegt ist, beträgt.

**11.** Zusammensetzung gemäß einem der Ansprüche 1 bis 9, wobei die Menge an Komponente (B) 12 bis 25 Gewichtsteile, vorzugsweise 12 bis 20 Gewichtsteile, bezogen auf die Gesamtmenge von Komponente (A) und Komponente (B), die als 100 Gewichtsteile festgelegt ist, beträgt.

**12.** Zusammensetzung gemäß einem der vorstehenden Ansprüche, ferner umfassend (C) wenigstens einen Zusatzstoff, vorzugsweise ausgewählt aus der Gruppe bestehend aus Katalysatoren, rheologiesteuernden Mitteln, Pigmenten, Antioxidationsmitteln, UV- und Lichtstabilisatoren, Haftförderern, Weichmachern, Dihydrogenmitteln und Füllstoffen.

**13.** Gehärtetes Produkt, erhalten durch Härten der Zusammensetzung gemäß einem der Ansprüche 1 bis 12.

**14.** Verwendung der Zusammensetzung gemäß einem der Ansprüche 1 bis 12 als Bindemittel, Beschichtung, Dichtmittel oder Klebstoff.

**15.** Verbundstruktur, umfassend ein erstes Substrat und ein zweites Substrat, erhalten durch ein Verfahren umfassend die Schritte des Inkontaktbringens der Zusammensetzung gemäß einem der Ansprüche 1 bis 12 mit dem ersten

Substrat und dem zweiten Substrat und Härten der Zusammensetzung.

**Revendications**

1. Composition comprenant (A) un polymère ayant au moins un groupe silyle réactif choisi dans le groupe constitué d'un polyéther ayant au moins un groupe silyle réactif, un polymère à base de (méth)acrylate ayant au moins un groupe silyle réactif, un polyisobutylène ayant au moins un groupe silyle réactif et une silicone ayant au moins un groupe silyle réactif et des combinaisons de ceux-ci et (B) un dérivé de lignine ayant au moins un groupe fonctionnel qui est réactif avec le composant (A).

2. Composition selon la revendication 1, dans laquelle le groupe fonctionnel du composant (B) est un groupe silyle réactif.

3. Composition selon l'une des revendications précédentes, dans laquelle le composant (A) comprend le polyéther ayant au moins un groupe silyle réactif, de préférence dans laquelle la quantité du polyéther ayant au moins un groupe silyle réactif relativement à la quantité totale de composant (A) est au moins 50% en poids, par exemple au moins 60% en poids, au moins 70% en poids, au moins 80% en poids, au moins 90% en poids, au moins 95% en poids, au moins 97% en poids ou au moins 99% en poids.

4. Composition selon l'une des revendications précédentes, dans laquelle le groupe silyle réactif du composant (A) est un groupe silyle contenant au moins un groupe alcoxy, de préférence deux ou trois groupes alcoxy, et est de préférence choisi parmi au moins l'un d'un groupe méthyl diméthoxy silyle, d'un groupe triméthoxy silyle et d'un groupe triéthoxy silyle.

5. Composition selon l'une quelconque des revendications précédentes, dans laquelle le composant (B) comprend un groupe représenté par -OR, dans lequel R est un groupe silyle contenant au moins un groupe alcoxy, de préférence deux ou trois groupes alcoxy, particulièrement de préférence R est le propyl (diméthoxyméthyl)silane ou le propyl triméthoxysilane.

6. Composition selon l'une quelconque des revendications précédentes, dans laquelle (B) présente un poids moléculaire moyen en poids tel que déterminé par chromatographie par perméation de gel inférieur à 5000 g/mol, de préférence inférieur à 3000 g/mol.

7. Composition selon l'une quelconque des revendications 1 à 6, dans laquelle le (B) présente un poids moléculaire moyen en poids tel que déterminé par chromatographie par perméation de gel de 100 à 1000 g/mol, par exemple de 100 à 300 ou de 300 à 1000 g/mol.

8. Composition selon l'une quelconque des revendications 1 à 6, dans laquelle le dérivé de lignine ayant au moins un groupe silyle réactif présente un poids moléculaire moyen en poids tel que déterminé par chromatographie par perméation de gel de 1000 à 5000 g/mol, de préférence de 1000 à 3000 g/mol.

9. Composition selon l'une quelconque des revendications précédentes, dans laquelle la quantité de composant (B) est de 1 à 25 parties en poids, de préférence de 3 à 20 parties en poids, par rapport à la quantité totale de composant (A) et de composant (B) qui est fixée à 100 parties en poids.

10. Composition selon l'une quelconque des revendications 1 à 9, dans laquelle la quantité de composant (B) est de 1 à 12 parties en poids, par exemple de 1 à 7 parties en poids ou de 7 à 12 parties en poids, par rapport à la quantité totale de composant (A) et de composant (B) qui est fixée à 100 parties en poids.

11. Composition selon l'une quelconque des revendications 1 à 9, dans laquelle la quantité de composant (B) est de 12 à 25 parties en poids, de préférence de 12 à 20 parties en poids, par rapport à la quantité totale de composant (A) et de composant (B) qui est fixée à 100 parties en poids.

12. Composition selon l'une quelconque des revendications précédentes comprenant en outre (C) au moins un additif choisi de préférence dans le groupe constitué des catalyseurs, des agents de contrôle de la rhéologie, des pigments, des antioxydants, des stabilisants d'UV et de lumière, des promoteurs d'adhérence, des plastifiants, des agents dihydrogène et des charges.

**13.** Produit durci obtenu en durcissant la composition selon l'une quelconque des revendications 1 à 12.

**14.** Utilisation de la composition telle que définie dans l'une quelconque des revendications 1 à 12 comme liant, revêtement, mastic ou adhésif.

**15.** Structure collée comprenant un premier substrat et un second substrat obtenu par un procédé comprenant les étapes de mise en contact de la composition selon l'une quelconque des revendications 1 à 12 avec le premier substrat et le second substrat et de durcissement de la composition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3825359 A
- US 10150895 B
- EP 2684690 A


### Non-patent literature cited in the description


- **VAN DE PAS D.J. ; TOR K.M.** Biobased Epoxy Resins from Deconstructed Native Softwood Lignin. *Biomacromolecules,* 2017
- **SELS S.B.F.** Chemicals from lignin: an interplay of lignocellulose fractionation, depolymerisation and upgrading. *Chem. Soc. Rev,* 2018, vol. 47, 852-908
- **JIANG B. ; HU J. ; QIAO Y. ; JIANG X. ; LU P.** Biofuels and Biomass Depolymerisation of lignin over Ni-Pd bimetallic catalyst using isopropanol as in situ hydrogen source. *Energy & Fuels,* 2019
- **COSTA C.A.E. ; PINTO 5 P.C.R. ; RODRIGUES A.E.** Lignin fractionation from E. Globulus kraft liquor by ultrafiltration in a three stage membrane sequence. *Sep. Purif. Technol.,* 2018, vol. 192, 140-151
- **HUANG C. ; HE J. ; NAROON R. ; WANG Y. ; YONG Q.** Characterisation of Kraft Lignin Fractions Obtained by Sequential Ultrafiltration and Their potential application as a biobased component in blends with polyethylene. *ACS Sustain. Chem. Eng.,* 2017
- **AMINSADEH S. ; LAUBERTS M. ; DOBELE G ; PONOMARENKO J. ; MATTSSON T.** Membrane filtration of kraft lignin: structural characteristics and antioxidant activity of low-molecular-weight fraction. *Ind. Crop. Prod.,* 2018, vol. 112, 200-209
- **BOERIU, C. G. ; FIT, I. ; STOUTJESDIJK, J. ; PETER, F.** Fractionation of five technical lignins by selective extraction in green solvents and characterisation of isolated fractions. *Ind. Crop. Prod.,* 2014, vol. 62, 481-490
- **ARSHANITSA, A. ; KRUMINA, L. ; TELYSHEVA, G. ; DIZHBITE T.** Exploring the application potential of incompletely soluble organosolv lignin as a macromonomer for polyurethane synthesis. *Ind. Crop. Prod.,* 2016, vol. 92, 1-12
- **KIM, J. ; CHOI, J. W.** Effect of molecular size of lignin on the formation of aromatic hydrocarbon during zeolite catalyzed pyrolysis. *Fuel,* 2019, vol. 240, 92-100